# FASCICULE DE BREVET EUROPEEN

(11) **EP 0 543 727 B1**
(45) Date de publication et mention de la délivrance du brevet: **15.03.1995**
(21) Numéro de dépôt: 92403101.6
(22) Date de dépôt: 18.11.1992
(51) Int. Cl.: F16D 23/14

(54) **Tube-guide à étanchéité intégrée pour butée de débrayage de boîte de vitesses de véhicule automobile**
Führungshülse mit eingebauter Dichtung für Kupplungsausrücklager eines Kraftfahrzeuggetriebes
Guide member with integrated seal, for clutch release bearing in a motor vehicle gearbox

(30) Priorité: 18.11.1991 FR 9114180
(43) Date de publication de la demande: 26.05.1993
(73) Titulaire: PROCAL, Société anonyme dite, 52200 Langres (FR)
(72) Inventeur: Pernin, Jean-François, F-52600 Chalindrey (FR)
(74) Mandataire: Leszczynski, André

(56) Documents cités:
- FR-A- 2 305 639
- FR-A- 2 656 395

## Description

La présente invention est relative à un tube-guide à étanchéité intégrée pour butée de débrayage de boîte de vitesses de véhicule automobile.

D'une manière générale, les butées de débrayage coulissent sur un manchon tubulaire engagé axialement autour de l'arbre d'entrée de la boîte de vitesses et emmanché à force dans un alésage du carter de celle-ci.

Une bague d'étanchéité du type à lèvre assure une fonction d'étanchéité dynamique vis-à-vis de l'arbre d'entrée de la boîte de vitesses.

Le tube-guide est fixé sur la face extérieure de la paroi du carter de la boîte de vitesses par une platine, qui, avantageusement peut être réalisée sous forme de portée radiale réalisée d'un seul tenant avec le manchon tubulaire, ladite platine étant munie de découpes ou de trous pour le passage d'organes de fixation, tels que des vis, du tube-guide sur la paroi du carter. Pour assurer une étanchéité statique entre le tube-guide et le carter, on a prévu de mettre en place un joint d'étancheité entre la face frontale de la platine et la paroi du carter, notamment sous la forme d'un bourrelet annulaire en élastomère surmoulé sur la face frontale de la platine de manière à faire saillie de celle-ci.

La platine, notamment dans les modes de réalisation où elle est d'un seul tenant avec le manchon tubulaire du tube-guide, présente une épaisseur relativement faible, dans la pratique de l'ordre de 1 mm.

On constate alors qu'il se produit, en cours de fonctionnement du véhicule, des micro-mouvements du tube-guide par rapport à la paroi du carter de la boîte de vitesses.

Ces micro-mouvements entraînent des efforts de fatigue et à terme, des ruptures, au niveau des organes de fixation de la platine du tube-guide sur le carter.

Pour assurer une rigidification de la platine, il a été proposé d'associer à celle-ci une plaque de renfort, d'épaisseur sensiblement supérieure à celle de la platine, par exemple dans la pratique de l'ordre de 4 mm emmanchée sur le tube-guide et venant s'appliquer contre la face arrière de la platine de fixation du tube-guide à la paroi du carter.

La plaque de renfort présente des découpes ou des trous pour le passage des organes de fixation du tube-guide au carter, susceptibles d'être alignés avec les découpes ou les trous correspondants de la platine.

La présence de cette plaque de renfort entraîne des difficultés lors des phases de transport du tube-guide sur le site de montage et pour le montage lui-même dans la mesure où il est nécessaire de prévoir et manipuler séparément la pièce supplémentaire que constitue la plaque de renfort.

La présente invention se propose de réaliser un tube-guide unitaire, c'est-à-dire comportant une plaque de renfort réunie à lui, évitant ainsi les inconvénients de la manipulation de deux pièces séparées.

Le tube-guide selon la présente invention est défini par les caractéristiques de la revendication 1. Les modes de réalisation de l'invention font l'objet des revendications dépendantes.

On comprend ainsi, que grâce aux caractéristiques de l'invention, on réalise au cours de la même étape de moulage, d'une part la formation du bourrelet frontal annulaire destinée à réaliser l'étanchéité statique entre le tube-guide et le carter et l'adhérisation de la plaque de renfort et du tube-guide.

Cette étape de moulage a également pour effet supplémentaire avantageux que, du fait de la pression exercée, les irrégularités de planéité du tube-guide et de la plaque de renfort mis en place dans le moule sont éliminées ou, à tout le moins réduites.

De plus le matériau élastomère traversant le ou les orifices prévus à cet effet dans la platine favorise la solidarisation du bourrelet d'étanchéité de la face frontale de la platine du tube-guide.

Le nombre, la forme et la section des orifices prévus dans la platine du tube-guide peuvent être quelconques. Il est cependant souhaitable de prévoir des orifices de section suffisamment faible et en un nombre suffisant faible pour ne pas amoindrir la ridigité mécanique de la platine.

Ces orifices doivent cependant être déterminés de façon à assurer une surface d'adhérisation suffisante sur la plaque de renfort.

Dans un mode particulier de réalisation dans lequel la platine et la plaque de renfort comportent plusieurs trous, équiangulairement répartis pour le passage des organes de fixation du tube-guide au carter, il est avantageusement prévu selon l'invention dans la platine, pour le passage du matériau élastomère, plusieurs orifices, équiangulairement répartis, décalés angulairement par rapport aux trous destinés aux organes de fixation, et de section plus petite que celle desdits trous.

Les orifices peuvent être réalisés sous forme de trous circulaires ou de lumières oblongues.

Pour augmenter la surface d'adhérisation de la plaque de renfort celle-ci peut présenter sur sa face frontale, en regard des orifices de la platine des parties en saillie et/ou en creux.

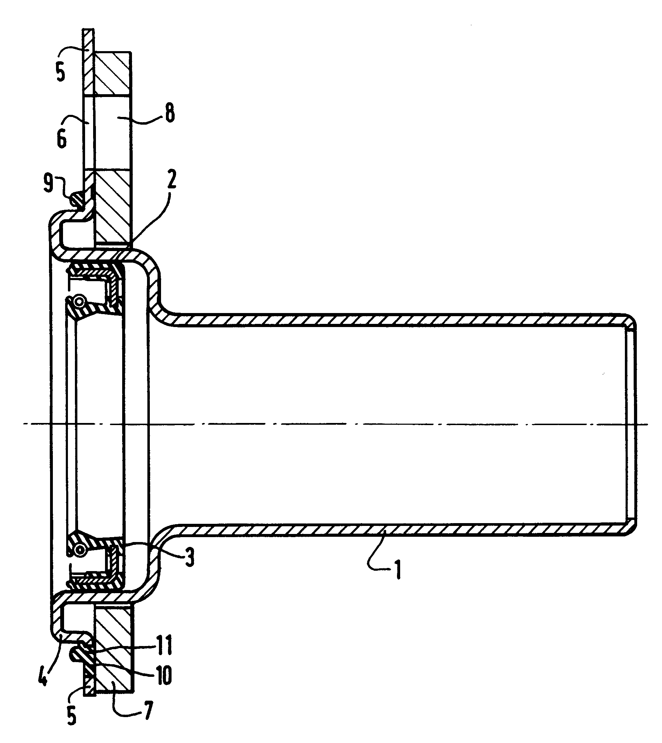

Dans le but de mieux faire comprendre l'invention, on va maintenant en décrire un exemple de réalisation nullement limitatif en se référant au dessin annexé dans lequel :
- la figure unique est une vue en coupe longitudinale d'un tube-guide selon l'invention.

Le tube-guide selon l'invention comprend un manchon tubulaire métallique 1 comportant à son extrémité frontale (vers la gauche sur le dessin) une partie cylindrique de plus grand diamètre 2 à l'intérieur de laquelle est emmanchée à force une bague d'étanchéité à lèvre de type radial 3 destinée à réaliser une étanchéité dynamique par rapport à l'arbre d'entrée de la boîte de vitesses (non représenté).

La partie de plus grand diamètre 2 se prolonge par une partie saillante en couronne 4 apte à pénétrer dans un alésage prévu dans la paroi du carter de la boîte de vitesses (non représenté), de manière à positionner le tube-guide par rapport au carter.

La partie 4 se prolonge elle-même par une portée radiale 5 constituant la platine de fixation du tube-guide à la paroi du carter.

Pour cette fixation, la portée radiale formant platine 5 comporte des trous 6 pour le passage d'organes de fixation tels que des vis (non représentés).

Dans l'exemple illustré, la platine 5 présente une forme très sensiblement triangulaire avec trois trous de fixation 6 disposés au voisinage des sommets.

Une plaque de renfort 7 d'épaisseur sensiblement supérieure à celle de la platine 5 et de forme extérieure similaire à celle-ci est appliquée contre la face arrière de la platine 5. La plaque de renfort 7 présentant des trous 8 dont le nombre et les dimensions correspondent aux trous 6 ménagés dans la platine 5 de manière que les mêmes organes de fixation fixent simultanément au carter la platine 5 et la plaque de renfort 7.

Sur la face frontale de la platine 5, il est prévu un joint d'étanchéité statique sous la forme d'un bourrelet annulaire 9 réalisé autour et au voisinage de la partie saillante en couronne 4. Le bourrelet 9 est écrasé entre la face frontale de la platine et la paroi du carter lors du serrage des organes de fixation du tube-guide et de la plaque de renfort, ce qui assure une étanchéité statique entre le tube-guide et le carter.

Selon l'invention, la platine 5 comporte des orifices 10 disposés au voisinage de la zone dans laquelle est formé le bourrelet 9, de telle sorte que, lors de l'étape de moulage du bourrelet en élastomère 9, du matériau élastomère pénètre dans les orifices 10 en formant des zones 11 au contact de la face frontale de la plaque de renfort 7. Ces zones 11 réalisent une adhérisation entre la plaque de renfort 7 et la platine 5 de telle sorte que le tube-guide et la contre-plaque constituent un ensemble unitaire.

Ainsi, l'on peut fabriquer puis transporter jusqu'au site de montage un ensemble d'un seul tenant comportant les moyens de rigidification nécessaires de la platine (plaque de renfort 7), les moyens d'étanchéité dynamique (bague à lèvre 3) et les moyens d'étanchéité statique (bourrelet annulaire 9).

Il suffit de fixer cet ensemble à l'aide d'organes de fixation tels que des vis traversant les trous 6 et 8 alignés de la platine 5 et de la plaque de renfort 7.

Dans l'exemple de réalisation illustré, il peut être prévu dans la platine 5 trois orifices 10, de section circulaire équiangulairement et décalés angulairement par rapport aux trous 6 de la platine.

Comme on le voit sur le dessin, le diamètre des orifices 10 est notablement inférieur à celui des trous 6 de manière à ne pas influencer défavorablement la rigidité de la platine.

Dans l'exemple illustré, le tube-guide comprenant le manchon tubulaire 1 avec sa partie avant élargie 2, la partie de positionnement 4 et la platine 5, est réalisé d'un seul tenant.

Le tube-guide ainsi constitué et la plaque de renfort 7 peuvent être phosphatés et encollés avant l'étape de moulage destinée à former le bourrelet d'étanchéité 9 et à réaliser l'adhérisation de la plaque de renfort et de la platine, et ceci afin de réduire les risques d'oxydation ultérieure.

Bien que l'invention ait été décrite en liaison avec un mode de réalisation particulier, il est bien évident qu'elle n'y est nullement limitée et qu'on peut lui appporter diverses variantes et modifications sans pour autant sortir de son cadre tel que défini par les revendications.

## Revendications

1. Tube-guide à étanchéité intégrée pour butée de débrayage de boîte de vitesses de véhicule automobile, comportant un manchon tubulaire (1) apte à être engagé axialement autour de l'arbre d'entrée de la boîte de vitesses, une portée radiale formant platine de fixation (5) du tube-guide sur la face extérieure de la paroi du carter de la boîte de vitesses, une bague d'étanchéité à lèvre (3) engagée à l'intérieur du manchon et un bourrelet annulaire d'étanchéité (9) en saillie de la face frontale de la platine, caractérisé par le fait qu'une plaque de renfort (7) d'épaisseur sensiblement supérieure à celle de la platine (5) est appliquée contre la face arrière de ladite platine, et comporte des découpes ou des trous (8) pour le passage d'organes de fixation du tube-guide au carter, susceptibles d'être alignés avec des découpes ou des trous correspondants (6) de la platine, ladite platine comportant au moins un orifice traversant (10) réalisé dans la zone dudit bourrelet annulaire d'étanchéité (9), de telle sorte que, lors de la formation par moulage dudit bourrelet, le matériau élastomère constitutif de celui-ci traverse le ou les orifices (10) de ladite platine et vient adhérer à la plaque de renfort (7) réalisant la solidarisation de la plaque de renfort et de la platine du tube-guide.

2. Tube-guide selon la revendication 1, caractérisé par le fait que ladite platine (5) est réalisée sous forme de portée radiale d'un seul tenant avec le manchon tubulaire (1).

3. Tube-guide selon l'une quelconque des revendications 1 et 2, caractérisé par le fait que la platine (5) et la plaque de renfort (7) comportent plusieurs trous (6,8) équiangulairement répartis pour le passage des organes de fixation du tube-guide au carter, et que ladite platine comporte plusieurs orifices (10), équiangulairement répartis, décalés angulairement par rapport aux trous destinés aux organes de fixation, et de section plus petite que celle desdits trous.

## Claims

1. Guide tube with integral sealing for clutch release bearing in an automotive vehicle gearbox, comprising a tubular sleeve (1) adapted to be engaged axially around the input shaft of the gearbox, a radial bearing forming a fixing plate (5) for the guide tube on the outer face of the wall of the casing of the gearbox, a sealing ring with lip (3) engaged inside the sleeve and an annular sealing beading (9) projecting from the front face of the plate, characterized by the fact that a reinforcing plate (7) of thickness substantially greater than that of the plate (5) is applied against the rear face of said plate, and comprises cut-outs or holes (8) for the passage of fixing elements for the guide tube to the casing, these cut-outs or holes being aligned with corresponding cut-outs or holes (6) of the plate, said plate comprising at least one through orifice (10) formed in the region of said annular sealing beading (9) in such a way that, during the forming by moulding of said beading, the elastomer material of which the beading is made passes through the orifice or orifices (10) of said plate and bonds to the reinforcing plate (7), thus creating the fixing of the reinforcing plate to the plate of the guide tube.

2. Guide tube according to Claim 1, characterized by the fact that said plate (5) is realized in the form of a radial bearing in one piece with the tubular sleeve (1).

3. Guide tube according to any one of Claims 1 and 2, characterized by the fact that the fixing plate (5) and the reinforcing plate (7) comprise several equiangularly distributed holes (6, 8) for the passage of the fixing elements for the guide tube to the casing, and that said fixing plate comprises several equiangularly distributed orifices (10), angularly offset from the holes intended for the fixing elements, and of a smaller section than that of said holes.

## Patentansprüche

1. Führungshülse mit integrierter Dichtung für das Kupplungsausrücklager eines Kraftfahrzeuggetriebes, umfassend eine auf die Eingangswelle des Getriebes axial aufschiebbare Rohrmuffe (1), wobei ein radialer Abschnitt eine Platte (5) zur Befestigung der Führungshülse an der Außenfläche der Wand des Getriebegehäuses bildet, einen innen an der Muffe angreifenden Lippendichtungsring (3) und einen an der Vorderfläche der Platte herausragenden Dichtungs-Ringwulst (9), dadurch **gekennzeichnet**, daß die hintere Fläche der Platte (5) mit einer Verstärkungsscheibe (7) hinterlegt ist, die wesentlich dicker ist als die Platte und mit entsprechenden Ausschnitten oder Öffnungen (6) der Platte im wesentlichen fluchtende Ausschnitte oder Löcher (8) zum Hindurchführen von Elementen zur Befestigung der Führungshülse an dem Gehäuse aufweist, wobei die Platte in Bereich des Dichtungs-Ringwulstes (9) mindestens eine Durchgangsöffnung (10) aufweist, so daß beim Formen des Wulstes das ihn bildende Elastomermaterial die Öffnung bzw. Öffnungen (10) der Platte durchsetzt und an der Verstärkungsscheibe (7) anhaftet, so daß die Verstärkungsscheibe und die Platte der Führungshülse miteinander vereinigt werden.

2. Führungshülse nach Anspruch 1, dadurch gekennzeichnet, daß die Platte (5) als an die Rohrmuffe (1) angeformter Radialbereich ausgebildet ist.

3. Führungshülse nach Anspruch 1 oder 2, dadurch gekennzeichnet, daß die Platte (5) und die Verstärkungsscheibe (7) mehrere gleichwinklig verteilte Löcher (6, 8) zur Durchführung der Elemente zur Befestigung der Führungshülse an dem Gehäuse aufweisen und daß die Platte mit mehreren gleichwinklig verteilten Öffnungen (10) versehen ist, die bezüglich der Löcher für die Befestigungselemente im Winkel versetzt sind und einen kleineren Querschnitt haben als diese.
